# EUROPÄISCHE PATENTSCHRIFT

(11) **EP 0 867 463 B1**
(45) Veröffentlichungstag und Bekanntmachung des Hinweises auf die Patenterteilung: **11.08.2004**
(21) Anmeldenummer: 98104692.3
(22) Anmeldetag: 16.03.1998
(51) Int. Cl.: C08J 3/00, C08L 21/00, C08L 101/00

(54) **Verfahren zur Herstellung von elastomermodifizierten Thermoplasten**
Method of producing of elastomer modified thermoplastics
Procédé de fabrication de matières thermoplastiques modifiés avec élastomères

(30) Priorität: 27.03.1997 DE 19713039
(43) Veröffentlichungstag der Anmeldung: 30.09.1998
(73) Patentinhaber: BAYER AG, 51368 Leverkusen (DE)
(72) Erfinder: Liesenfelder, Ulrich, 51469 Bergisch Gladbach (DE); Thiem, Hans-Jürgen, Dr., 41539 Dormagen (DE); Ullrich, Martin, 51375 Leverkusen (DE)

(56) Entgegenhaltungen:
- EP-A- 0 125 483
- EP-A- 0 153 587

## Beschreibung

Die vorliegende Erfindung betrifft ein kontinuierliches Verfahren zur Herstellung elastomermodifizierter Thermoplaste. Ein Elastomer, insbesondere ein gegebenenfalls teilchenförmiges Pfropfpolymer mit einer Wasserfeuchte von 1 bis 50%, bevorzugt 10 bis 40%, wird in einem großvolumigen Knetreaktor in eine Thermoplastschmelze eingearbeitet. Das Mischungsverhältnis von Elastomer zu Thermoplastschmelze beträgt dabei insbesondere von 4:1 bis 1:4. Die zum Aufschmelzen des Elastomer und zur Verdampfung des anhaftenden Wassers notwendige Energie wird durch Beheizung der Apparatewände und über die Knetwirkung der rotierenden Einbauten zugeführt.

Elastomermodifizierte thermoplastische Polymere, z.B. Kautschuk gefüllte Thermoplaste, werden üblicherweise ausgehend von Kautschuk durch Emulsionspfropfpolymerisation auf einer Kautschukbasis hergestellt. Die thermoplastische Matrix kann wirtschaftlich in einem Masse- oder Lösungsverfahren hergestellt werden. In der Emulsionspolymerisation wird beispielsweise ein Pfropfpolymer mit hohem Kautschukgehalt (typisch: 50 Gew.-%) hergestellt, das nach der Aufarbeitung mit einem Matrixpolymer compoundiert wird. Die Aufarbeitung des Pfropflatex erfolgt über die Bearbeitungsschritte: Fällung, Wäsche, mechanische und thermische Trocknung.

Die thermische Trocknung eines Pfropflatex in der festen Phase erfordert allerdings einen hohen Energieaufwand und wird wegen der mit der Trocknung verbundenen Staubexplosionsgefahr in inertisierten Trocknern durchgeführt. Eine Aufgabe der Erfindung besteht demnach darin, den Energieaufwand gegenüber den genannten Verfahren deutlich zu mindern.

Neben der häufig angewendeten Kombination aus Pulvertrocknung und anschließender Compoundierung mit dem Thermoplasten werden im Stand der Technik bereits Verfahren zur Schlagzähmodifizierung von Thermoplasten beschrieben, die auf der Einarbeitung von mechanisch nur teilweise entwässerten Kautschuk-Latices direkt in thermoplastische Polymere auf einem Schnecken-Extruder beruhen (siehe z.B. DE 20 37 784). Weiterentwickelte Extruderverfahren werden in den europäischen Offenlegungsschriften EP 0 534 235 A1, EP 0 665 095 A1, EP 0 735 077 A1, EP 0 735 078 A1, EP 0 734 825 A1 und EP 0 734 826 A1 beschrieben.

Ein besonderer Nachteil dieser Verfahren ist die hohe Beanspruchung der Kautschuk/Thermoplastmischung aufgrund der hohen Schergeschwindigkeit von bis zu 1 000 s⁻¹ in Schneckenextrudern.

Ein weiterer Nachteil besteht in der mehrstufigen Verfahrensführung bei dem letztgenannten Verfahren, da zunächst Wasser entzogen, anschließend die Schmelzevermischung und in einem weiteren Schritt die Restentgasung des Polymeren vorgenommen wird.

Da die Energie bei der Schneckenmaschine im wesentlichen als mechanische Energie über die Schneckenwellen eingetragen wird, ist es nur begrenzt möglich, den Energieeintrag über Wärmezufuhr zu steuern und eine thermische Belastung der Polymeren zu vermeiden.

Aufgabe der Erfindung ist es ein Direktverarbeitungsverfahren bereitzustellen, das die Staubexplosionsgefahr der Verfahren mit Pulvertrockung vermeidet und die verschiedenen Nachteile der Verarbeitung in Scheckenextrudern überwindet.

Gegenstand der Erfindung, durch die die genannte Aufgabe gelöst wird, ist ein Verfahren zur Herstellung von elastomermodifizierten Thermoplasten durch Mischen von Elastomer, insbesondere von Kautschuk, der durch Pfropfpolymerisation mit einer Hülle aus einem thermoplastischen Kunststoff A umgeben ist, mit einem thermoplastischen Kunststoff B, wobei das feuchte Elastomer, insbesondere ein Pfropfpolymer, das aus einem Latex gefällt ist, auf 1 bis 50 Gew.-%, insbesondere 5 bis 50 Gew.-%, insbesondere bevorzugt 10 bis 40 Gew.-%, Restfeuchte entwässert und in den als Schmelze vorliegenden thermoplastischen Kunststoff B eingemischt wird, das dadurch gekennzeichnet ist, daß das Verdampfen des dem Elastomeren, insbesondere dem Pfropfpolymeren anhaftenden Prozeßwassers, das Schmelzen des Elastomeren, das Legieren des Elastomeren mit der Schmelze des thermoplastischen Kunststoffs B, sowie die Entfernung von weiteren organischen flüchtigen Bestandteilen C simultan in einem Prozeßraum erfolgt.

Bevorzugt erfolgt die Entwässerung in der ersten Stufe mechanisch, z.B. durch Abpressen oder Zentrifugieren.

Insbesondere wird die zum Aufschmelzen, Aufheizen und Ausdampfen der Polymermischung notwendige Energie mechanisch über die Knetwirkung der Rotoren und thermisch über die Gehäuseflächen des Knetreaktors eingebracht, wobei das Verhältnis zwischen in die Mischung einzubringender mechanischer und thermischer Energie bevorzugt von 4 : 1 bis 1 : 6, insbesondere bevorzugt von 2,5 : 1 bis 1 : 4 beträgt.

Der Prozeß wird bevorzugt in einem großvolumigen teilweise gefüllten Knetreaktor mit rotierenden Einbauten durchgeführt, in dem pro Liter Prozeßraum nicht mehr als 5 kg/h Polymer durchgesetzt werden. Die Verweilzeit der Mischung im Prozeßraum beträgt bevorzugt von 2 bis 20 Minuten.

Die Knetwirkung der Rotoren wird insbesondere unabhängig von deren Drehgeschwindigkeit über die Steuerung des Füllgrades der Maschine beeinflußt.

In einer weiteren bevorzugten Variante des Verfahrens werden das dem Elastomer anhaftende Wasser und weitere flüchtige Bestandteile C in nur einer Druckstufe, insbesondere bei einem Druck von 10 bis 2000 hPa, entfernt.

Insbesondere wird die Entwässerung der Polymeren in einem Knetreaktor durchgeführt, in dem die Misch- und Knetwirkung der Knetreaktoreinbauten weitgehend von der Transportbewegung des Mischgutes entkoppelt ist.

Das Mischungsverhältnis zwischen thermoplastischem Kunststoff B und Elastomer ist bei Durchführung eines bevorzugten Verfahrens ohne Änderung der Verfahrensparameter oder der im Verfahren eingesetzten Gerätekonfiguration im Bereich von 1:4 bis 4:1 änderbar.

Bei der Mischung von Elastomer und Thermoplast B werden insbesondere zusätzliche Farb- und/oder Zuschlagstoffe so mitverarbeitet, daß sie der Mischung vor dem Entwässern der Mischung zugegeben werden.

Bevorzugt werden in einer Verfahrensvariante Farb- und/oder Zuschlagsstoffe der Polymermischung in einem dem Prozeßraum nachgeschalteten insbesondere statischen Mischer zugegeben.

Geeignet für die Durchführung des erfindungsgemäßen Verfahrens sind Knetreaktoren, die die Mischung zähplastischer Phasen beherrschen, beispielsweise solche die aus den Schriften EP 0 517 068 A1, EP 460 466 B1 oder EP 0 528 210 A1 JP-A-63232828 bekannt geworden sind. Bevorzugt werden zweiwellige Reaktoren entsprechend der Schrift EP 0 517 068 A1 eingesetzt. Da die mechanische Beanspruchung der Rotoren und die benötigte Antriebsleistung u.U. erheblich höher ist als bei konventionellen Anwendungen dieser Geräteklasse, kann es erforderlich sein, bei marktgängigen Geräten eine Versteifung der Rotoren vorzunehmen und einen erheblich leistungsstärkeren Antrieb im Vergleich zur üblichen Ausstattung auszuwählen.

Das wasserfeuchte Elastomer, insbesondere Pfropfpolymer wird in einer bevorzugten Ausführungsform mittels einer Stopfschnecke oder einer Kolbenschleuse zugeführt. Alternativ kann das Elastomer über eine Seiher- oder Abpressschnecke unter teilweiser mechanischer Entfernung der Wasserfeuchte zugeführt werden. Weiterhin wird die Thermoplastschmelze in der bevorzugten Ausführungsform über die eintrittsseitige Stirnplatte des Knetreaktors zugeführt. Damit wird verhindert, daß das in der Regel temperaturempfindlichere Elastomer mit den heißen Gehäuseflächen in Berührung kommt. Das Elastomer wird vielmehr sofort bei Eintritt in den großvolumigen Knetreaktor in der Thermoplastschmelze B eingebettet. Außerdem wird die Beeinträchtigung des Mischproduktes durch eventuelle Nebenprodukte aufgrund längerer Eduktverweilzeit am Knetreaktoranfang vermieden. Der Austrag des entwässerten, entgasten und compoundierten, elastomermodifizierten Thermoplasten aus dem Knetreaktor erfolgt vorzugsweise über eine Austragschnecke oder Zahnradpumpe an oder nahe der dem Zulauf gegenüberliegenden Stirnplatte. Durch diese Anordnung wird das Reaktorvolumen optimal genutzt. An das Austragsorgan kann eine Schmelzesiebung und Granulierung nach dem Stand der Technik angekoppelt werden. Die Brüden werden über eine Entgasungsöffnung abgezogen, die bevorzugt nahe dem Produktaustrag angeordnet wird, und dann nach grundsätzlich bekannter Weise kondensiert. Bei einer Anordnung der Entgasungsöffnung näher an der Einspeisestelle wächst die Gefahr, daß durch Pulverflug die Ausbeute vermindert wird. Weiterhin wird in der bevorzugten Ausführungsform die Entgasungsöffnung durch eine Schnecke gereinigt. Damit wird verhindert, daß Schmelze in den Brüdenkanal gelangt und zu Verstopfungen führt. In der bevorzugten Ausführungsform sind weiterhin alle produktberührenden Oberflächen des Knetreaktors beheizt. Dadurch wird die Energiezufuhr in den Prozeßraum maximiert, so daß der Prozeß wirtschaftlich optimal betrieben werden kann. Das Verfahren wird bevorzugt bei einem Innendruck von 1 hPa bis 5 000 hPa, insbesondere von 10 bis 2 000 hPa durchgeführt, bevorzugt jedoch bei Normaldruck, gegebenenfalls auch unter Zugabe von Inertgasen. Die Temperatur der Apparatewandbeheizung beträgt insbesondere 150 bis 350°C, bevorzugt 180 bis 300°C, besonders bevorzugt 200 bis 270°C. Die spezifische Antriebsleistung für einen Reaktor mit rotierenden Einbauten beträgt insbesondere von 0,01 bis 1 kWh pro kg trockene Polymerschmelze, bevorzugt von 0,05 bis 0,5 kWh/kg und besonders bevorzugt 0,05 bis 0,25 kWh/kg.

Zur Durchführung des erfindungsgemäßen Verfahrens geeignete Pfropfpolymere sind pfropfpolymerisierte Vinylverbindungen wie z.B. von Styrol, α-Methylstyrol, Acrylnitril, Methylmethacrylat und Alkylacrylat oder deren Mischungen; besonders bevorzugt sind Methylmethacrylat sowie Mischungen von Styrol und Acrylnitril, von α-styrol und Acrylnitril, von Methylmethacrylat und Styrol, von Methylmethacrylat und Alkylacrylat von α-Methylstyrol, Methylmethacrylat und Acrylnitril. Als Kautschuke (Pfropfgrundlagen) kommen Dienhomo- und -Copolymerisate z.B. von Butadien, Isopren, Chloropren, gegebenenfalls mit bis zu 35 Gew.-% Comonomeren wie Styrol, Acrylnitril, Methylmethacrylat, Alkylacrylat, Vinylmethylether in Betracht oder Alkylacrylat-Polymerisate (insbesondere von C₁-C₁₀-Alkylacrylaten), die gegebenenfalls bis zu 20 Gew.-% Vinylmonomere, wie Styrol, Acrylnitril, Vinylacetat, C₁-C₁₀-Alkylmethacrylat einpolymerisiert enthalten; die Acrylatkautschuke sind gegebenenfalls durch Einpolymerisieren polyfunktioneller Vinyl- oder Allylmonomere partiell vernetzt; vernetzende Monomere sind z.B. Bis-Acrylate, Bis-Acrylamide, Butadien, Acrylsäurevinylester, Triallylcyanurat, Trialkylisocyanurat, Zitronensäuretrisallylester, Bis-Carbonsäurevinylester.

Als Elastomer kann im erfindungsgemäßen Verfahren jedes Polymer eingesetzt werden, das elastomere Eigenschaften hat und einem Extruder zugeführt werden kann. Geeignete Kautschuke sind z.B. Nitrilkautschuke bzw. teilverseifte Nitrilkautschuke. Insbesondere werden teilchenförmige Kautschuke verwendet. Besonders bevorzugt sind solche Kautschuke, die eine aufgepfropfte Hülle aus anderem, in der Regel nicht elastomerem thermoplastischen Kunststoff A aufweisen.

Acrylatkautschuke enthalten die vernetzenden Monomere in Mengen bis maximal 5 Gew.-%. Die Kautschuke können auch Kern/Mantel-Struktur besitzen, d.h. die Acrylatkautschukpartikel enthalten einen Kautschukkern, der sich strukturell von dem ihn umgebenden Acrylatkautschuk unterscheidet, oder einen harten Thermoplastharzkern. Insbesondere können Stufen aus einem oder mehreren der Monomeren Styrol, Alkylstyrol, Acrylnitril, Methylmethacrylat polymerisiert werden. Bevorzugt sind Pfropfpolymeren auf Basis von Butadien/Styrol/Acrylnitril, n-Butylacrylat/Styrol/Acrylnitril, Butadieo/n-Butylacrylat/Styrol/Acrylnitril, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril.

Zusammen mit diesen bevorzugten Pfropfpolymeren werden als thermoplastische Kunststoffe B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere besonders bevorzugt als Kunststoff B. Besonders bevorzugt eingesetzte Copolymerisate werden erhalten aus 20 bis 40 Gew.-% Acrylnitril und 80 bis 60 Gew.-% Styrol oder α-Methylstyrol. Sie sind bekannt und lassen sich durch radikalische Polymerisation z.B. in Emulsion, Suspension, Lösungs- oder Masse herstellen. Die Copolymerisate besitzen vorzugsweise ein Molekulargewicht M_{w} von 15 000 bis 200 000.

Weiterhin können als thermoplastische Kunststoffe B auch Polycarbonat, Polybutylenterephthalat, Polyoxymethylen, Polymethylmethacrylat, Polyphenylensulfid, Polysulfone, Polyethersulfone und Polyamide und Mischungen dieser Thermoplasten eingesetzt werden.

Die Pfropfpolymerisat-Latices enthalten im allgemeinen 30 bis 90 Gew.-% Kautschuk, bevorzugt 50 bis 85 Gew.-%.

Die Vinylpolymerisatlatices können in bekannter Weise durch Emulsionspolymerisation in wäßrigen Medien bzw. Emulsionspfropfpolymerisation in Gegenwart von Kautschuklatices hergestellt werden. Im Falle von kautschukfreien Polymerisaten werden die Monomere bei pH-Werten von ca. 12 bis 2, insbesondere von 10 bis 3, radikalisch in Gegenwart von Seifen (Emulgatoren) in wäßrigem Medium polymerisiert. Als Initiatoren kommen insbesondere wasserlösliche Radikalbildner wie Peroxodisulfate, Peroxodiphosphate, wasserlösliche Hydroperoxide und Peroxosäuren in Betracht, sowie Redoxinitiatorsysteme. Die Polymerisation, dike normalerweise bei 40 bis 90°C durchgeführt wird, erfordert die Anwesenheit eines ionischen Emulgators, insbesondere eines anionischen Emulgators, in Mengen bis zu 4 Gew.-%, bevorzugt bis zu 2,5 Gew.-%, bezogen auf die Monomere. Geeignete Emulgatoren sind beispielsweise Fettsäuresalze, Alkylsulfonsäuresalze mit längerkettigen Alkylresten und Schwefelsäurealkylhalbester mit längerkettigen Alkylresten sowie bevorzugt Alkalisalze der disproportionierten Abietinsäure.

Die so hergestellten Vinylpolymerisat-Latices weisen i.a. einen Polymerfeststoffgehalt von 10 bis 70 Gew.-%, vorzugsweise von 25 bis 50 Gew.-% auf. Der Anteil an nicht polymerisierten Monomeren im Latex beträgt in der Regel 0 bis 15 Gew.-%, vorzugsweise 0 bis 5 Gew.-% bezogen auf den Polymerfeststoffgehalt des Latex. Die Größe der Vinylpolymerisat-Latexteilchen beträgt 50 bis 1 000 nm, vorzugsweise 80 bis 650 nm.

Die Latices werden nach grundsätzlich bekannten Verfahren koaguliert (siehe z.B. im EP 459 161 A2).

Als Koagulans verwendet man vorzugsweise wäßrige Lösungen von wasserlöslichen anorganischen oder organischen Säuren und/oder Salzen, wie Salzsäure, Schwefelsäure, Phosphorsäure, Borsäure, Ameisensäure, Essigsäure, Propionsäure, Zitronensäure, Alkali- und Erdalkali-chloride, -sulfate, -formiate, -acetate, -phosphate, -carbonate, Aluminate, teilverseifte Polyvinylacetate gegebenenfalls in Kombinationen mit anorganischen oder organischen Säuren. Je nach zu koagulierender Vinylpolymerisatlatexmischung benutzt man 0,2 bis 25 gew.-%ige wäßrige Lösungen.

Unter organischen flüchtigen Bestandteilen C werden Monomere und niedermolekulare Oligomere der eingesetzten thermoplastischen Polymere bzw. der Elastomere oder Pfropfpolymere (z.B. Styrol, Acrylnitril), Emulgatorbestandteile (z.B. Dihydroabietinsäure) oder Lösemittel, die bei der Herstellung der Pfropfpolymere bzw. Thermoplasten eingesetzt werden (z.B. Ethylbenzol, MEK), verstanden.

Gegenüber den bekannten Extruderverfahren zeichnet sich das erfindungsgemäße Verfahren durch eine schonende und gegebenenfalls kontinuierliche Verarbeitung der Ausgangskomponenten aus. Die höchsten Schergeschwindigkeiten treten bei Extrudern, d.h. den beschriebenen bekannten Verfahren mit gleichsinnig rotierende Zweiwellenschnecken, zwischen den Schneckenwellen und zwischen Schneckenwelle und Gehäusewand auf Diese Schergeschwindigkeit beträgt bei üblichen bekannten Verarbeitungsbedingungen die Größenordnung von 1000 s⁻¹. Sie ist damit deutlich höher als die in EP 0 734 825 A 1 zitierte mittlere Schergeschwindigkeit, die von der weniger stark gescherten Strömung im Schneckenkanal dominiert wird. Für die Beurteilung der Produktschädigung ist jedoch die Maximalbeanspruchung relevant. Diese liegt bei der Verarbeitung im Knetreaktor in der Größenordnung von 100 s⁻¹, also deutlich niedriger. Eine Besonderheit des erfindungsgemäßen Verfahrens besteht darin, daß z.B. das scherempfindliche Pfropfpolymer unmittelbar nach Eintritt in den Reaktor mit Thermoplastschmelze vermischt wird. Im Extruderverfahren nach EP 0 735 077 A1, EP 0 735 078 A1, EP 0 734 825 A1 und EP 0 734 826 A1 wird dagegen das Pfropfpolymer bereits einer hohen Schergeschwindigkeit ausgesetzt, bevor durch Zugabe von Thermoplastschmelze eine Schmierwirkung eintritt. Des weiteren ist auch die thermische Belastung des Polymeren niedriger, weil die Energiezufuhr, die dissipativ über die Knetwirkung der Rotoren und thermisch über die Beheizung der Wände erfolgt, durch freie Wahl der Rotordrehzahl und der Beheizungstemperatur an den Energiebedarf der Wasserverdampfung angepaßt werden kann. Bei der Verarbeitung auf Schneckenmaschinen ist die Einflußmöglichkeit über die Temperierung der Gehäuse gering, da der weitaus größere Anteil der Energie über die Dissipationsleistung der Schneckenwellen eingebracht wird. Die Verfahrensschritte Wasserverdampfung und Restentgasung des Polymeren finden auf der Schneckenmaschine nacheinander statt, während sie z.B. im Knetreaktor gleichzeitig ablaufen. Zwangsläufig wird dadurch im Extruder nach Beendigung der Wasserausdampfung weiter mechanische Energie zugeführt, die mit weiterer thermischer Belastung des Polymeren verbunden ist. Im erfindungsgemäßen Verfahren läuft die Verdampfung von Wasser und anderen flüchtigen Bestandteilen gleichzeitig ab. Der Prozeß kann deshalb so gesteuert werden, daß der elastomermodifizierte Thermoplast nach Beendigung der Wasserverdampfung aus dem Reaktor ausgetragen wird ohne die Schmelze einer weiteren thermischen Belastung auszusetzen.

Das Verfahren zeichnet sich gegenüber den bekannten Verfahren durch eine hohe Ausbeute aus. Während bei den Extruderverfahren in den Abpresszonen bis zu 10% Polymer mit dem abgepreßten Wasser ausgetragen wird und in den Verdampfungszonen wegen der geringen Querschnitte des Schneckenkanals hohe Dampfgeschwindigkeiten entstehen und deshalb leicht die Gefahr besteht, daß Polymer mit den Brüden mitgerissen wird, ist bei dem erfindungsgemäßen Verfahren praktisch kein Produktverlust zu verzeichnen. Durch den großen freien Querschnitt, z.B. eines Knetreaktors ist die Dampfgeschwindigkeit stets so gering, daß kein Polymer mitgerissen wird.

Aus den bereits genannten Vorteilen resultiert als weiterer Vorteil des erfindungsgemäßen Verfahrens eine hohe Flexibilität. Aufgrund der schonenden Verarbeitung können Mischungen, die einen sehr hohen Elastomeranteil enthalten, ohne Produktschädigung verarbeitet werden. Außerdem können Mischungen mit einem vergleichsweise hohen Wassergehalt verarbeitet werden, ohne daß Einbußen in der Ausbeute entstehen.

Im Extruder werden mehrere Verfahrensschritte nacheinander durchlaufen und zwar wie in den Schriften EP 0 735 077 A1, EP 0 735 078 A1, EP 0 734 825 A1 und EP 0 734 826 A1 eingehend dargelegt, mit jeweils auf den Prozeßschritt und das zu verarbeitende Produkt abzustimmender Schneckengeometrie. Im Knetreaktor wird das Schmelzen des Elastomeren, z.B. des Pfropfpolymeren, das Legieren der beiden Schmelzen, das Verdampfen und Entgasen von Wasser sowie gegebenenfalls von Monomeren und anderen organischen flüchtigen Bestandteilen simultan in einem Prozeßraum durchgeführt. Es ist dabei insbesondere nicht erforderlich, den Reaktor an spezielle Produkteigenschaften zu adaptieren. Von besonderem praktischem Interesse sind Mischungen von Elastomer und thermoplastischer Matrix, die ein Mischungsverhältnis von 1:4 bis 4:1 aufweisen. Die gesamte Bandbreite dieser Polymerlegierungen kann auf ein und derselben Maschine ohne spezielle Adaption hergestellt werden. Speziell können auch Farb- und/oder Zuschlagstoffe bereits bei der Herstellung der Polymermischung zugegeben werden, so daß eine weitere Compoundierung entfällt. Das Verfahren zeichnet sich daher durch große Einfachheit aus. Es handelt sich um einen Einstufenprozeß, während die bekannten Extruderverfahren zwangsläufig mehrstufig sind. Wird das Verfahren bevorzugt unter Normaldruck durchgeführt, ist keine spezielle Vakuumtechnik erforderlich. Trotzdem erreicht man einen niedrigen Restgehalt an flüchtigen Bestandteilen. Alle marktgängigen Verfahren, die Extruder zur Lösung der gestellten Aufgabe einsetzen, arbeiten mit zusätzlicher Vakuumtechnik.

Die mittlere Verweilzeit des Produktes bei Durchführung des Verfahrens im Prozeßraum, insbesondere in einem Knetreaktor liegt typischerweise bei 2 bis 20 Minuten, bevorzugt 3 bis 10 Minuten. Sie ist damit deutlich länger als bei einem Extruderverfahren, wo die typische Verweilzeit kleiner als 1 Minute beträgt Überraschenderweise wird jedoch gefunden, daß bessere Farbwerte der fertigen Polymermischung mit dem erfindungsgemäßen Verfahren erreicht werden als bei einem Extruderverfahren.

### Beispiele

In den nachfolgenden Beispielen werden folgende Polymere eingesetzt:

### Zusammensetzung A)

Mit Styrol und Acrylnitril in Gew.-Verhältnis 72:28 bepfropfter, teilvernetzter Polybutadienlatex (mittlerer Durchmesser der Latexteilchen d₅₀ = 400 nm) mit einem Polymerisatgehalt von 36,5 Gew.-% und einem Restmonomergehalt von 0,75 Gew.-%, bezogen auf Polymerisat. Das Pfropfpolymerisat enthält 55 Gew.-% Kautschuk.

### Zusammensetzung B)

Mit Styrol und Acrylnitril in Gew.-Verhültnis 72:28 bepfropfter, teilvernetzter Polybutadienlatex (mittlerer Durchmesser der Latexteilchen d₅₀ = 120 nm) mit einem Polymerisatgehalt von 36,5 Gew.-% und einem Restmonomergehalt von 0,5 Gew.-%, bezogen auf Polymerisat. Das Pfropfpolymerisat enthält 50 Gew.-% Kautschuk.

Die Latices werden nach bekannten Methoden hergestellt (vergl. US-PS 4 399 273). Der mittlere Teilchendurchmesser (d₅₀-Wert) wird durch Ultrazentrifügenmessung bestimmt (W. Scholtan, H. Lange; Kolloidz. und Z. Polymere 250 (1972) 782-796).

### Pfropfpolymer BMG:

Eine Mischung aus je 50 Gew.-% der Vinylpolymerisatlatices A und B wird in einer Fallkaskade bei oberhalb 92°C durch Zugabe von MgSO₄ und Essigsäure coaguliert, neutralisiert, filtriert, elektrolytfrei gewaschen und nach der Wäsche in einer Zentrifuge oder durch eine Bandpresse auf 28 bis 35 Gew.-% Wassergehalt entwässert. Dieses Produkt wird für die weiteren Beispiele eingesetzt.

### Pfropfpolymer P50:

Pfropfpolymerlatex A wird wie Pfropfpolymer B behandelt, coaguliert und nach der Wäsche in einer Zentrifuge oder durch eine Bandpresse auf 28 bis 35 Gew.-% Wassergehalt entwässert. Dieses Produkt wird für die weiteren Beispiele eingesetzt.

### Thermoplast SAN M60 (L-Wert 60):

Styrol/Acrylnitril Copolymerisat aus 72 Gew.-% Styrol und 28 Gew.-% Acrylnitril mit einem Molekulargewicht (Gewichtsmodul) M_{w} von ca. 80 000 und einer Uneinheitlichkeit U = M_{w}/M_{N}-1 = 2.

### Beispiel 1

10,625 kg pro Stunde eines Styrol-Acrylnitril-Copolymerisates (SAN) mit einem L-Wert von 60 werden mit einer Schmelzetemperatur von 230°C einem modifizierten ORP 12-Reaktor der List AG, Arisdorf (CH) mit hinsichtlich Verwindungssteifigkeit verstärkten Rotoren zugeführt. Der Reaktor weist ein nutzbares Volumen von 30,6 l auf Mittels einer Stopfschnecke werden dem Reaktor ebenfalls 49 kg pro Stunde eines 34,6% Wasser enthaltenden Pfropfpolymeren BMG in Pulverform zugeführt. Die Drehzahl der beiden Rotoren des Reaktors beträgt 100 bzw. 25 Umdrehungen pro Minute. Mittels einer Doppelwellenaustragschnecke wird das aufgeschmolzene, compoundierte und von flüchtigen Bestandteilen befreite Produkt mit einer Temperatur von 237°C extrudiert. Die Beheizung der Reaktorwände und der Rotoren erfolgt mit Wärmeträgeröl einer Temperatur von 275°C. An den Rotorwellen wird eine mechanische Leistung von 3 kW abgenommen. Über die Apparatewände wird eine Heizleistung von etwa 12 kW zugeführt. Insgesamt wird bezogen auf das Pfropfpolymer eine spezifische Leistung von 0,47 kWh/kg zugeführt. Die mittlere Verweilzeit des Produktes im Apparat beträgt ca. 11 Minuten, d.h. der Apparat ist im Mittel zu etwa 27% mit Polymermischung gefüllt.

Eine GC-Analyse ergibt einen Restgehalt an flüchtigen Bestandteilen von 320 ppm im Produkt. In den Edukten waren rund 2 000 ppm (aus Pfropfpolymer) bzw. 1 000 ppm (aus SAN) flüchtige Bestandteile enthalten.

Das erhaltene Produkt wird im Verhältnis 40:60 mit Styrol-Acrylnitril-Copolymerisate (SAN) mit einem L-Wert von 60 verknetet und in Form von Plättchen zur Farbbeurteilung abgespritzt.

### Vergleichsbeispiel 1

Als Vergleich wird Pfropfpolymer, das eine thermische Trocknung durchlaufen hat, mit eine Styrol-Acrylnitril-Copolymerisate (SAN) mit einem L-Wert von 60 verknetet, so daß sich der gleiche Kautschukgehalt ergibt. Ein Vergleich der Farbe der Farbmusterplatten aus beiden Verfahren ergibt keinen Farbunterschied.

Der Energieaufwand alleine für die thermische Trocknung des Pfropfpolymers in einem offenen Stromtrockner beträgt 0,85 kWh/kg.

### Beispiel 2

70 kg pro Stunde eines Styrol-Acrylnitril-Copolymerisates (SAN) mit einem L-Wert von 60 werden mit einer Schmelzetemperatur von 230°C dem ORP 12 - Reaktor der List AG, Arisdorf (CH); zugeführt. Der Reaktor weist ein nutzbares Volumen von 30,6 l auf. Mittels einer Stopfschnecke werden dem Reaktor ebenfalls 42,26 kg pro Stunde eines 29% Wasser enthaltenden Pfropfpolymeren P50 in Pulverform zugeführt. Die Drehzahl der beiden Rotoren des Reaktors beträgt 120 bzw. 30 Umdrehungen pro Minute. Die Energiezufuhr über die Rotorwellen beträgt 7,6 kW. Über die Gehäusewand werden 4,8 kW zugeführt. Der Füllgrad im Apparat beträgt 36% (bezogen auf die Polymermischung) und die mittlere Verweilzeit der Mischung im Apparat 6,5 Minuten. Mittels einer Doppelwellenaustragschnecke wird das aufgeschmolzene, compoundierte und von flüchtigen Bestandteilen befreite Produkt bei 240°C extrudiert. Die Reaktorwände und Rotoren werden mit Wärmeträgeröl einer Temperatur von 270°C beheizt.

### Beispiel 3

67,18 kg pro Stunde eines Styrol-Acrylnitril-Copolymerisates (SAN) mit einem L-Wert von 60 werden mit einer Schmelzetemperatur von 230°C einem CRP 12-Reaktor der List AG, Arisdorf (CH); mit verstärkten Rotoren zugeführt. Der Reaktor weist ein nutzbares Volumen von 30,6 l auf Mittels einer Stopfschnecke werden dem Reaktor ebenfalls 44 kg pro Stunde eines 34,5% Wasserfeuchte enthaltenden Pfropfpolymeren in Pulverform BMG zugeführt. Die Drehzahl der beiden Rotoren des Reaktors beträgt 100 bzw. 80 Umdrehungen pro Minute. Die Energiezufuhr über die Rotorwellen beträgt 15,2 kW. Der Füllgrad im Apparat beträgt 31% und die mittlere Verweilzeit im Apparat 6 Minuten. Mittels einer Doppelwellenaustragschnecke wird das aufgeschmolzene, compoundierte und von flüchtigen Bestandteilen befreite Produkt bei 234°C extrudiert. Die Reaktorwände und Rotoren werden mit Wärmeträgeröl einer Temperatur von 250°C beheizt.

Eine GC-Analyse ergibt einen Restgehalt an flüchtigen Bestandteilen von 60 ppm im Produkt. In den Edukten waren rund 2 000 ppm (aus Pfropfpolymer) bzw. 1 000 ppm (aus SAN) flüchtige Bestandteile enthalten.

### Vergleichsbeispiel 2

10,615 kg pro Stunde eines 14,8% Wasser enthaltenden Pfropfpolymeren werden einer gleichsinnigen, zweigängisen Zweiwellenschnecke mit selbstreinigendem Profil zugeführt. 3,025 kg pro Stunde eines Styrol-Acrylnitril-Copolymerisates (SAN) mit einem L-Wert von 60 werden mit einem Seitenextruder aufgeschmolzen und bei einer Schmelzetemperatur von 230°C der Hauptmaschine zugeführt. Die Zweiwellenschnecke ist durch einen Gehäusedurchmesser von 34 mm und einen Achsabstand von 28 mm gekennzeichnet. Das freie Volumen der Schnecke beträgt 1,03 l. Die Drehzahl der Schneckenwellen der Hauptmaschine beträgt 150 Umdrehungen pro Minute. Nach der Vereinigung der Stoffströme durchläuft das Produkt eine Mischzone mit Knetelementen. Anschließend wird in einer Entgasungszone, die bei Normaldruck betrieben wird, der überwiegende Teil der Wasserfeuchte verdampft. In zwei weiteren Entgasungszonen, die bei 500 mbar bzw. 20 mbar Absolutdruck betrieben werden, findet die Restentgasung statt. Das Produkt wird mit einer Temperatur von 220°C extrudiert. Die mittlere Verweilzeit des Produkts in der Zweiwellenschnecke beträgt ca. 100 s. Das erhaltene Produkt wird im Verhältnis 40:60 mit Styrol-Acrylnitril-Copolymerisate (SAN) mit einem L-Wert von 60 verknetet und in Form von Plättchen zur Farbbeurteilung abgespritzt. Als Vergleich wird Pfropfpolymer, das eine thermische Trocknung durchlaufen hat, mit eine Styrol-Acrylnitril-Copolymerisate (SAN) mit einem L-Wert von 60 verknetet, so daß sich der gleiche Kautschukgehalt ergibt. Ein Vergleich der Farbe der Abspritzungen ergibt eine Verschlechterung der Farbe durch die Compoundierung des Feuchtgutes auf der Zweiwellenschnecke.

## Patentansprüche

1. Verfahren zur Herstellung von elastomermodifizierten Thermoplasten durch Mischen von Elastomer, insbesondere von Kautschuk, der durch Pfropfpolymerisation mit einer Hülle aus einem thermoplastischen Kunststoff A umgeben ist, mit einem thermoplastischen Kunststoff B, wobei das feuchte Elastomer, insbesondere ein Pfropfpolymer, das aus einem Latex gefällt ist, auf 1 bis 50 Gew.-%, insbesondere 5 bis 50 Gew.-%, insbesondere bevorzugt 10 bis 40 Gew.-%, Restfeuchte entwässert und in den als Schmelze vorliegenden thermoplastischen Kunststoff B eingemischt wird, **dadurch gekennzeichnet, daß** das Verdampfen des dem Elastomeren anhaftenden Prozeßwassers, das Schmelzen des Elastomeren, das Legieren des Elastomeren mit der Schmelze des thermoplastischen Kunststoffs B, sowie die Entfernung von weiteren organischen flüchtigen Bestandteilen C simultan in einem Prozeßraum erfolgt.

2. Verfahren nach Anspruch 1, **dadurch gekennzeichnet, daß** die zum Aufschmelzen, Aufheizen und Ausdampfen der Polymermischung notwendige Energie mechanisch über die Knetwirkung der Rotoren und thermisch über die Gehäuseflächen eines Knetreaktors eingebracht wird.

3. Verfahren nach Anspruch 2, **dadurch gekennzeichnet, daß** das Verhältnis zwischen in die Mischung einzubringender mechanischer und thermischer Energie von 4 : 1 bis 1 : 6, insbesondere von 2,5 : 1 bis 1 : 4 beträgt.

4. Verfahren nach den Ansprüchen 1 bis 3, **dadurch gekennzeichnet, daß** der Prozeß in einem großvolumigen teilweise gefüllten Knetreaktor mit rotierenden Einbauten durchgeführt wird, in dem pro Liter Prozeßraum nicht mehr als 5 kg/h Polymer durchgesetzt werden.

5. Verfahren nach den Ansprüchen 1 bis 4, **dadurch gekennzeichnet, daß** der Prozeß in einem großvolumigen Knetreaktor mit rotierenden Einbauten durchgeführt wird, in dem die Knetwirkung der Rotoren unabhängig von deren Drehgeschwindigkeit über die Steuerung des Füllgrades der Maschine beeinflußt wird.

6. Verfahren nach den Ansprüchen 1 bis 5, **dadurch gekennzeichnet, daß** das dem Elastomer anhaftende Wasser und weiteren flüchtige Bestandteile C in nur einer Druckstufe, insbesondere bei einem Druck von 1 bis 5000 hPa, insbesondere von 10 bis 2000 hPa, entfernt werden.

7. Verfahren nach den Ansprüchen 1 bis 6, **dadurch gekennzeichnet, daß** die Entwässerung in einem Knetreaktor durchgeführt wird, in dem die Misch- und Knetwirkung der Knetreaktoreinbauten weitgehend von der Transportbewegung des Mischgutes entkoppelt ist.

8. Verfahren nach den Ansprüchen 1 bis 7, **dadurch gekennzeichnet, daß** das Mischungsverhältnis zwischen Thermoplast B und Elastomer im Bereich von 1:4 bis 4:1 änderbar ist ohne Änderung der Verfahrensparameter oder der im Verfahren eingesetzten Gerätekonfiguration.

9. Verfahren nach den Ansprüchen 1 bis 8, **dadurch gekennzeichnet, daß** bei der Mischung von Elastomer und Thermoplast B zusätzlich Farb- und/oder Zuschlagstoffe zugegeben werden.

10. Verfahren nach den Ansprüchen 1 bis 9, **dadurch gekennzeichnet, daß** das Verfahren in einem Knetreaktor mit Knetreaktoreinbauten durchgeführt wird, deren spezifische Antriebsleistung von 0,01 bis 1 kWh pro kg trockene Polymerschmelze, bevorzugt 0,05 bis 0,5 kWh/kg und besonders bevorzugt 0,05 bis 0,25 kWh/kg beträgt.

11. Verfahren nach den Ansprüchen 1 bis 10, **dadurch gekennzeichnet, daß** die Verweilzeit der Mischung im Prozeßraum von 2 bis 20 Minuten beträgt.

12. Verfahren nach den Ansprüchen 1 bis 8 und 10 bis 11, **dadurch gekennzeichnet, daß** Farb- und/oder Zuschlagstoffe der Polymermischung in einem dem Prozeßraum nachgeschalteten statischen Mischer zugegeben werden.

## Claims

1. Process for the production of elastomer-modified thermoplastics by mixing an elastomer, especially rubber, that has been surrounded by graft polymerisation with a sheath of a thermoplastic material A, with a thermoplastic material B, the moist elastomer, especially a graft polymer that is precipitated from a latex, being dewatered to 1 to 50 wt.%, especially 5 to 50 wt.%, particularly preferably 10 to 40 wt.% residual moisture, and being mixed into the thermoplastic material B present as melt, **characterised in that** the evaporation of the process water adhering to the elastomer, the melting of the elastomer, the compounding of the elastomer with the melt of the thermoplastic material B, as well as the removal of further organic volatile constituents C, are carried out simultaneously in a process chamber.

2. Process according to claim 1, **characterised in that** the energy required for the melting, heating and evaporation of the polymer mixture is introduced mechanically via the kneading action of the rotors and thermally via the surfaces of the housing of a kneader reactor.

3. Process according to claim 2, **characterised in that** the ratio of the mechanical and thermal energy to be introduced into the mixture is 4:1 to 1:6, in particular 2.5:1 to 1:4.

4. Process according to any one of claims 1 to 3, **characterised in that** the process is carried out in a large volume, partially filled kneader reactor with installed rotating parts, through which not more than 5 kg/hr of polymer pass per litre of processing space.

5. Process according to any one of claims 1 to 4, **characterised in that** the process is carried out in a large volume kneader reactor with installed rotating parts, in which the kneading action of the rotors is influenced independently of their rotational speed by controlling the degree of filling of the extruder.

6. Process according to any one of claims 1 to 5, **characterised in that** the water adhering to the elastomer, and further volatile constituents C are removed in only one pressure stage, in particular at a pressure of 1 to 5000 hPa, especially 10 to 2000 hPa.

7. Process according to any one of claims 1 to 6, **characterised in that** the dewatering is carried out in a kneader reactor in which the mixing and kneading action of the installed parts in the kneader reactor is largely decoupled from the transporting movement of the mixture.

8. Process according to any one of claims 1 to 7, **characterised in that** the mixing ratio of thermoplastic material B and elastomer can be altered in the range from 1:4 to 4:1 without altering the process parameters or the equipment configuration used in the process.

9. Process according to any one of claims 1 to 8, **characterised in that** in addition pigments and/or additives are added in the mixing of the elastomer and thermoplastic material B.

10. Process according to any one of claims 1 to 9, **characterised in that** the process is carried out in a kneader reactor with installed kneader reactor parts whose specific output is 0.01 to 1 kWh/kg of dry polymer melt, preferably 0.05 to 0.5 kWh/kg, and particularly preferably 0.05 to 0.25 kWh/kg.

11. Process according to any one of claims 1 to 10, **characterised in that** the residence time of the mixture in the process chamber is 2 to 20 minutes.

12. Process according to any one of claims 1 to 8 and 10 and 11, **characterised in that** pigments and/or additives are added to the polymer mixture in a static mixer located downstream of the process chamber.

## Revendications

1. Procédé pour la préparation de matières thermoplastiques modifiées par des élastomères par mélange d'un élastomère, en particulier d'un caoutchouc qui, à la suite de la polymérisation greffée, est enrobé d'une enveloppe d'une résine thermoplastique A, avec une résine thermoplastique B, l'élastomère humide, en particulier un polymère greffé, qui a été précipité à partir d'un latex, étant déshydraté jusqu'à 1 à 50 % en poids, plus spécialement 5 à 50 % en poids et dans les meilleures conditions 10 à 40 % en poids d'humidité résiduelle et mélangé avec la résine thermoplastique B à l'état fondu, ce procédé **se caractérisant en ce que** la vaporisation de l'eau résultant des opérations et adhérant à l'élastomère, la fusion de l'élastomère, la combinaison de l'élastomère avec la masse fondue de la résine synthétique thermoplastique B et l'élimination des autres constituants organiques volatils C se produisent simultanément dans un espace opératoire.

2. Procédé selon la revendication 1, **caractérisé en ce que** l'énergie nécessaire pour fondre, chauffer et éliminer les constituants volatils du mélange des polymères est apportée mécaniquement par l'effet de malaxage des rotors et thermiquement par les surfaces de logement d'un réacteur malaxeur.

3. Procédé selon la revendication 2, **caractérisé en ce que** le rapport entre l'énergie mécanique et l'énergie thermique apportées au mélange va de 4:1 à 1:6, plus spécialement de 2,5:1 à 1:4.

4. Procédé selon les revendications 1 à 3, **caractérisé en ce que** le procédé est mis en oeuvre dans un réacteur malaxeur à grand volume, rempli en partie, à pièces intérieures en rotation et dans lequel on ne fait pas passer plus de 5 kg/h de polymère par litre de l'espace opératoire.

5. Procédé selon les revendications 1 à 4, **caractérisé en ce que** le procédé est mis en oeuvre dans un réacteur malaxeur à grand volume et éléments intérieurs en rotation, dans lequel on agit sur l'effet de malaxage des rotors, indépendamment de leurs vitesses de rotation, par le taux de remplissage de la machine.

6. Procédé selon les revendications 1 à 5, **caractérisé en ce que** l'eau adhérant à l'élastomère et les autres constituants volatils C sont éliminés dans une seule opération sous pression, en particulier sous une pression de 1 à 5 000 hPa, plus spécialement de 10 à 2 000 hPa.

7. Procédé selon les revendications 1 à 6, **caractérisé en ce que** la déshydratation est réalisée dans un réacteur malaxeur dans lequel l'effet de mélange et de malaxage des pièces intérieures du réacteur en rotation est pratiquement découplé du mouvement de transport du mélange.

8. Procédé selon les revendications 1 à 7, **caractérisé en ce que** l'on peut faire varier les proportions relatives de mélange entre la résine thermoplastique B et l'élastomère dans l'intervalle de 1:4 à 4:1 sans variation des paramètres opératoires ni de la forme de l'appareil utilisé.

9. Procédé selon les revendications 1 à 8, **caractérisé en ce que**, lors du mélange de l'élastomère et de la résine thermoplastique B, on ajoute en outre des colorants et/ou des additifs.

10. Procédé selon les revendications 1 à 9, **caractérisé en ce que** le procédé est mis en oeuvre dans un réacteur malaxeur avec pièces intérieures malaxeuses dont la puissance motrice spécifique va de 0,01 à 1 kWh/kg de polymère fondu sec, de préférence de 0,05 à 0,5 kWh/kg et dans les meilleures conditions de 0,05 à 0,25 kWh/kg.

11. Procédé selon les revendications 1 à 10, **caractérisé en ce que** la durée de passage du mélange dans l'espace opératoire est de 2 à 20 min.

12. Procédé selon les revendications 1 à 8 et 10 à 11, **caractérisé en ce que** les colorants et/ou additifs sont ajoutés au mélange des polymères dans un mélangeur statique disposé à la suite de l'espace opératoire.
